# EUROPEAN PATENT SPECIFICATION

(11) **EP 1 984 849 B1**
(45) Date of publication and mention of the grant of the patent: **10.09.2014**
(21) Application number: 08723068.6
(22) Date of filing: 21.02.2008
(51) Int. Cl.: H04L 29/06, H04L 9/08

(54) **SYSTEM AND METHOD OF TRANSMITTING/RECEIVING SECURITY DATA**
SYSTEM UND VERFAHREN ZUM SENDEN/EMPFANGEN VON SICHERHEITSDATEN
SYSTÈME ET PROCÉDÉ DESTINÉS À LA TRANSMISSION/RÉCEPTION DE DONNÉES SÉCURISÉES

(30) Priority: 23.02.2007 KR 20070018707; 19.02.2008 KR 20080015037
(43) Date of publication of application: 29.10.2008
(73) Proprietor: KoreaCenter.Com Co., Ltd., Seoul 153-786 (KR)
(72) Inventor: LIM, Seong Jin, Seoul 153-786 (KR)
(74) Representative: Lang, Christian
(86) International application number: PCT/KR2008/001030
(87) International publication number: WO 2008/103000

(56) References cited:
- EP-A1- 1 533 970
- WO-A1-00/46994
- WO-A1-01/01644
- WO-A2-01/37068
- US-A- 6 148 405
- US-A1- 2002 029 340
- US-A1- 2006 173 787
- DAWSON E ET AL: "Key management in a non-trusted distributed environment", FUTURE GENERATIONS COMPUTER SYSTEMS, ELSEVIER SCIENCE PUBLISHERS. AMSTERDAM, NL, vol. 16, no. 4, 1 February 2000 (2000-02-01), pages 319-329, XP004185844, ISSN: 0167-739X, DOI: DOI:10.1016/S0167-739X(99)00056-4

## Description

### [Technical Field]

The present invention relates to a system and method of transmitting/receiving data, and more particularly to a security data transmitting /receiving system including a security server for intermediating security data transmission/reception and a security data transmitting/receiving method using the same.

### [Background Art]

With the development of communication systems, a variety of information is shared and e-commerce, banking and certificate issuance such as a copy of the resident registration have been widely implemented in wire/wireless data communication environments. If a user terminal (client) such as a personal computer accesses an on-line market managing server, then a banking server or a public office server (hereinafter referred to as a service providing server) through open network such as Internet, data transmission/reception between the user terminal and the service providing server may be implemented. The user terminal and the service providing server may encode the data by using a secure sockets layer (SSL) to transmit and receive the data. This is so that information leakage may be prevented in advance from potential hacking.

However, the conventional SSL have a limitation in that a certificate should be installed on the service providing server. Further, additional ports have to be assigned so as to install a plurality of certificates on one service providing server, which increases the server capacity. Thus, it is not easy to manage the server from the perspectives of web-hosting providers or application server providers.

WO 01/37068 A2 and EP 1 533 970 A1 describe methods and apparatuses for secure content delivery, wherein a secure connection is provided between a client and a server through a relay or a security server.

### [Disclosure]

### [Technical Problem]

The limitation, which of the certificates have to be installed on the service providing server, should be resolved. Thus, it is the object of the present application to provide a security server for intermediating security data transmission/reception between a service providing server and a user terminal, a security data transmission/reception system and a method of using the same, which are simple to handle and which allow data exchange under optimized security conditions.

### [Technical Solution]

The above mentioned object is solved by the security server for intermediating security data transmission/reception between a service providing server and a user terminal according to claim 1, by the security data transmission/reception system according to claim 6, by the method of using the same according to claim 12 and by the storage medium according to claim 16. Advantageous improvements of the present invention are the subject matter of corresponding dependent claims.

### [Advantageous Effects]

In accordance with the present invention, as the security server intermediates transmission/reception of security data between a service providing server and a user terminal, a limitation of installing the certificates on the service providing server may be prevented.

Also, since the entire data included in a web page are not encoded and only security data are encoded, data bandwidth may be decreased.

### [Description of Drawings]

FIG. 1 is a block diagram showing a security server and a security data transmission/reception system including the same in accordance with one embodiment of the present invention.
FIGS. 2 and 3 are schematic diagrams showing security data transmission/reception methods in accordance with embodiments of the present invention.
FIG. 4 is an exemplary diagram showing security data inputted from a user terminal, which is a security data transmitter, through a web page and transmitted to a security server.
FIG. 5 is a diagram showing examples of security data inputted from a security data transmitter in an HTML format and encoded security data.
FIG. 6 is a diagram showing an example of displaying secure data transmitted to a user terminal, which is a security data receiver, through a security server on a web page.

### [Best Mode]

In accordance with one aspect of the present invention, there is provided a security server for intermediating transmission/reception of security data between a service providing server and a user terminal. The security server is configured to: generate a session key corresponding to a secret key provided from a user terminal; receive security data together with the session key from a security data transmitter; encode the security data with the secret key corresponding to the session key; store the encoded security data; provide a data encryption key to the security data transmitter; decode the encoded security data with the secret key corresponding to the session key when the session key is received together with a security data request key from a security data receiver; and provide the decoded security data to the security data receiver.

In accordance with another aspect of the present invention, there is provided a system including a user terminal, a service providing server and a security server for intermediating transmission/reception of the security data between the user terminal and the service providing server. The security server is configured to: generate a session key corresponding to a secret key provided from the user terminal; receive security data together with the session key from a security data transmitter, which is one of the user terminal and the service providing server; encode the security data with the secret key corresponding to the session key; store the encoded security data; generate a data key of the security data; generate a data encryption key by encoding the data key with the secret key; provide the data encryption key to a security data transmitter; decode the encoded security data with the secret key corresponding to the session key when the session key is received together with the security data request key from the security data receiver, which is a different one of the user terminal and the service providing server; and provide the decoded security data to the security data receiver. Further, the user terminal is configured to: generate the secret key; transmit the session key and the security data in case of the security data transmitter; provide the data encryption key to the service providing server; receive the data encryption key from the service providing server in case of the security data receiver; transmit the session key and the security data request key to the security server; and receive the decoded security data from the security server. Moreover, the service providing server is configured to: transmit the session key and the security data to the security server; provide the data encryption key transmitted from the security server in case of the security data transmitter; receive the session key and the data encryption key from the user terminal; transmit the session key and the security data request key to the security server; and receive the decoded security data from the security server in case of the security data receiver.

In accordance with another embodiment of the present invention, there is provided a method of intermediating transmission/reception of security data between a service providing server and a user terminal, comprising the steps of: generating a session key corresponding to a secret key provided form the user terminal; providing the session key to the user terminal; receiving security data together with the session key from a security data transmitter, which is one of the user terminal and the service providing server; encoding the security data with the security key corresponding to the session key; generating a data key of the encoded security data; encoding the data key with the secret key to generate a data encryption key; providing the data encryption key to the security data transmitter; associating and storing the secret key, the session key, the data key and the encoded security data; decoding the encoded security data with the secret key corresponding to the session key when the session key and a security data request key are received from a security data receiver, which is one of the service providing server and the user terminal; and providing the security data to the security data receiver.

### [Mode for Invention]

Hereinafter, various embodiments of the present invention will be described in detail with reference to the accompanying drawings. However, in case of having possibility of unnecessarily making the subject matter of the present invention to be indefinite, a detailed description of well-known functions or configurations will be omitted.

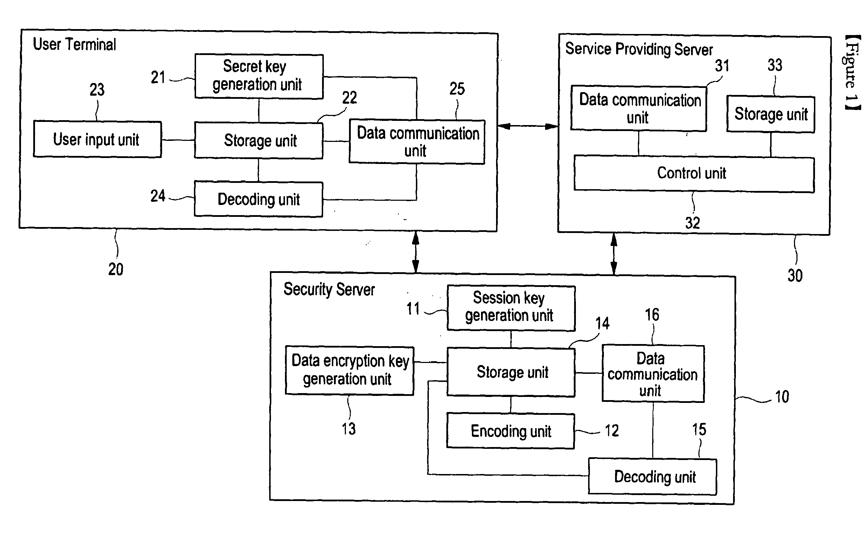

Referring to FIGS. 1 to 3, a security server 10 may provide intermediate security data transmission/reception between a user terminal 20 and a service providing server 30 in accordance with one embodiment of the present invention. The security data may include personal information such as a user name, a resident registration number, a telephone number and a password, as well as any data that needs to be secured such as account information. The security data are not limited to the above examples. The security data may include data promised to be secured between the user terminal 20 and the service providing server 30, as well as the entire data requested to be secured by the user terminal 20. The user terminal 20 may be a security data transmitter. Further, the service providing server 30 may be a security data receiver according to a preset service implementing procedure. Also, the inverse may be possible.

The user terminal 20 may be chosen from various communication devices such as a personal computer (PC), a personal digital assistance (PDA), a cell phone and the like, which access the service providing server 30 and receive a variety of contents therefrom. The service providing server 30, which is a server capable of providing request services (contents) of the user terminal 20 accessed thereto (logged-in), may be an on-line market managing server, a banking server, a public office server or the like. The security server 10, the user terminal 20 and the service providing server 30 may transmit/receive data based on the World Wide Web.

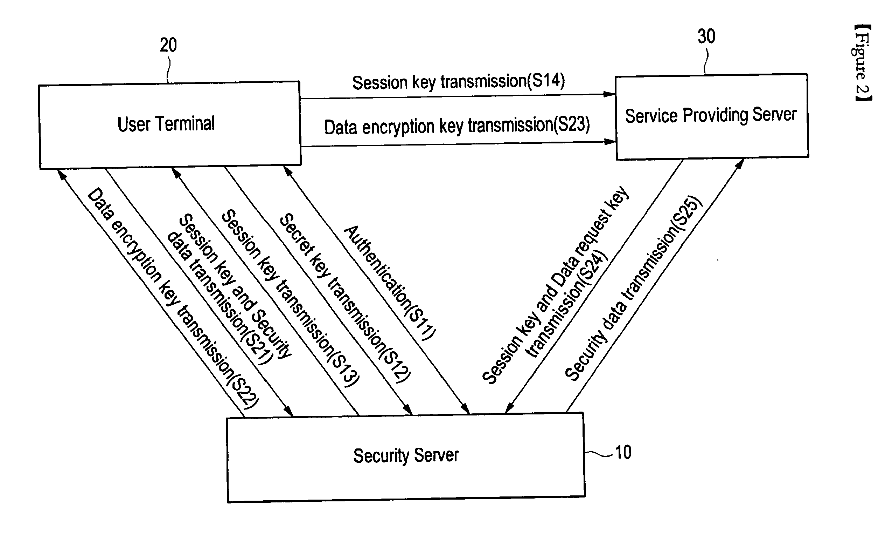

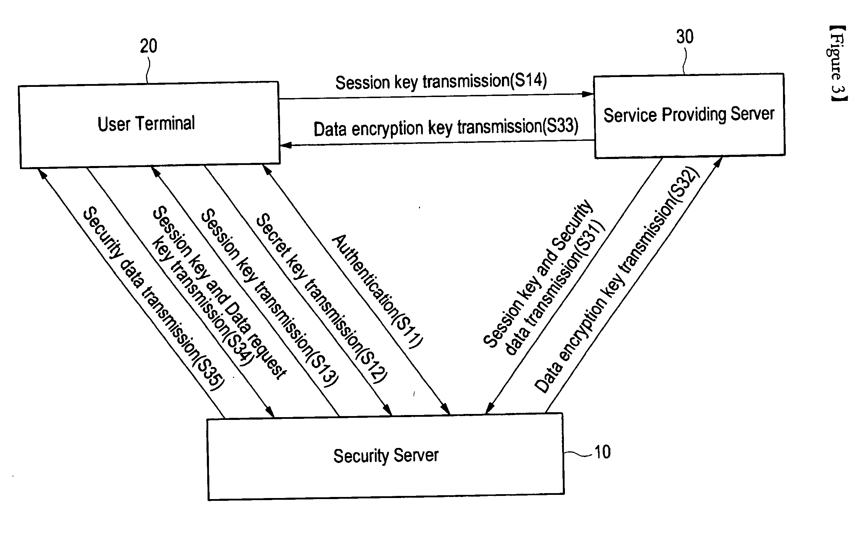

Referring to FIGS. 2 and 3, at an early stage of access between the user terminal 20 and the service providing server 30 or when a security data transmitting/receiving event between the user terminal 20 and the service providing server 30, e.g., a request of a web page in which the security data are written or to be written occurs, entity authentication between the security server 10 and the user terminal 20 may be performed at step S11. If the authentication is completed, then the security server 10 may receive a secret key from the user terminal 20 at step S12.

A session key generation unit 11 in the security server 10 may generate a session key corresponding to the secret key transmitted from the user terminal 20. The session key, which is a specific value for referring to the secret key, plays the role of an essential key in transmitting/receiving and requesting security data. The security server 10 transmits the session key to the user terminal 20 at step S13 and the user terminal 20 transmits the session key to the service providing server 30.

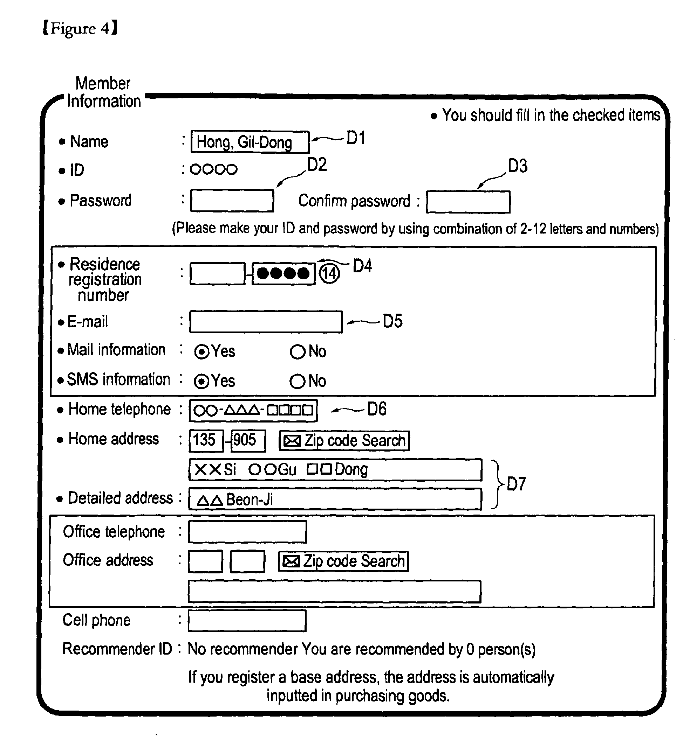

The security server 10 receives the security data together with the session key from the security data transmitter, which is one of the user terminal 20 and the service providing server 30, at steps S21 and S31. As shown in FIG. 4, when the user terminal 20 is the security data transmitter, the security data D1 to D7 inputted through the web page are transmitted to the security server 10. The security data D1 to D7 inputted from the user terminal 20 are transmitted to the security server 10 together with the session key.

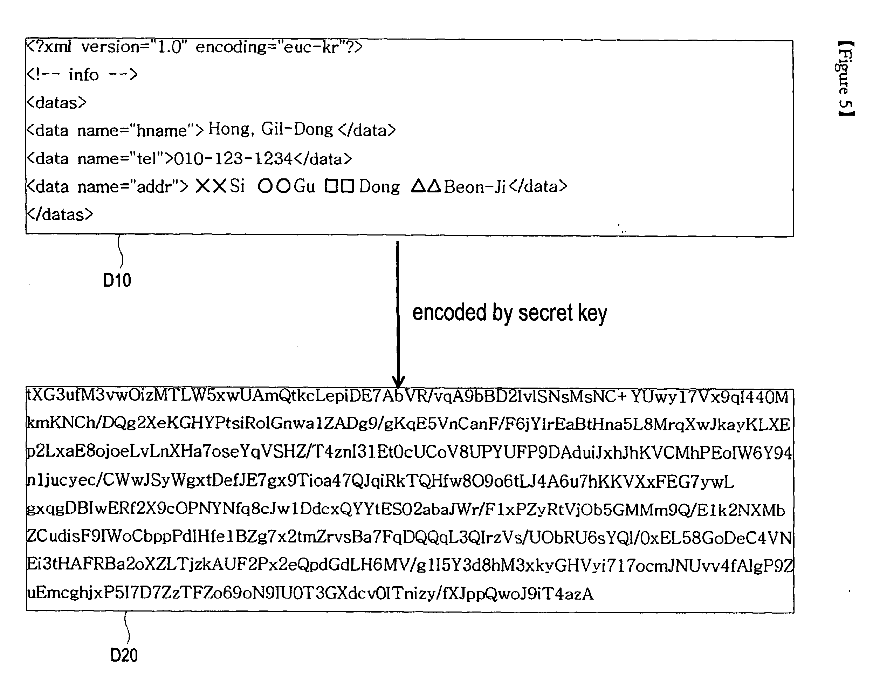

If the security data are transmitted from the security data transmitter together with the session key at steps S21 and S31, then an encoding unit 12 of the security server 10 encodes the security data with the secret key corresponding to the transmitted session key. The encoding unit 12 encodes the security data in a Rijndael encryption way in accordance with one embodiment of the present invention. However, the encryption way is not limited thereto. FIG. 5 shows examples of security data D10 inputted from the security data transmitter in a hypertext markup language (HTML) format and security data D20 encoded with the secret key, which are to be stored in a storage unit 14. As shown in such a figure, the present invention encodes not the entire data included in the web page but only the security data. This is so that the bandwidth of the data may be reduced.

The data encryption key generation unit 13 generates a data key as a specific value for referring to the encoded security data and a data encryption key by encoding the data key with the secret key. The data encryption key generation unit 13 also encodes the data key in the Rijndael encryption way to generate the data encryption key in accordance with one embodiment of the present invention. The data encryption key is transmitted from the security server 10 to the security data transmitter and then transmitted from the security data transmitter to the security data receiver. For example, when the security data transmitter is the user terminal 20 and the security data receiver is the service providing server 30 as shown in FIG. 2, the data encryption key is transmitted from the security server 10 to the user terminal 20 at step S22 and then transmitted from the user terminal 20 to the service providing server 30 at step S23. The data encryption key is recorded at a hidden field of the web page to be transmitted from the user terminal 20 to the service providing server 30. As shown in FIG. 3, when the security data transmitter is the service providing server 30 and the receiver is the user terminal 20, the data encryption key is transmitted from the security server 10 to the service providing server 30 and then security data are transmitted to the user terminal 20 at steps S32 and S33.

Referring back to FIG. 1, the storage unit 14 of the security server 10 stores the secret key, the session key, the data key, the data encryption key and the encoded security data, which are associated with each other.

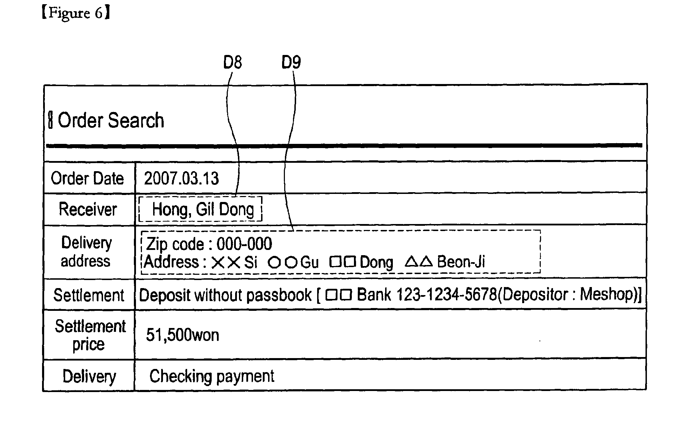

If the session key together with a security data request key is received from the security data receiver, then the decoding unit 15 of the security server decodes the encoded security data with the secret key corresponding to the session key. For example, if the data encryption key as the security data request key together with the session key is received from the service providing unit 30, which is the security data receiver as shown in FIG. 2 at step S24, or if the data key as the security data request key together with the session key is received from the user terminal 20, which is the security data receiver as shown in FIG. 3 at step S34, then the decoding unit 15 retrieves the secret key corresponding to the session key transmitted from the security data receiver and decodes the encoded security data with the retrieved secret key. In accordance with one embodiment of the present invention, the security data decoded by the decoding unit 15 may be security data represented by an extensible markup language (XML). The decoded security data are transmitted to the security data receiver at steps S25 and S35. FIG. 6 shows an example displaying the security data D8 and D9 transmitted from the security server 10 to the user terminal 20 on a web page when the service providing server 30 is the security data transmitter and the user terminal 20 is the security data receiver.

A data communication unit 16 transmits/receives the security key and the session key to/from the user terminal 20, transmits/receives the security data and the data encryption key to/from the security data transmitter, and transmits/receives the session key, security data request key and the security data to/from the security data receiver. It is preferable that the data communication unit 16 communicates with the user terminal 20 and the service providing server 30 based on secure sockets layer (SSL).

The session key generation unit 11, the encoding unit 12, the data encryption key generation unit 13 and the decoding unit 15 of the security server 10, which are mentioned above, may be embodied as independent devices or one or more devices. For example, the session key generation unit 11, the encoding unit 12, the data encryption key generation unit 13 and the decoding unit 15 may be embodied as a single processor for performing the functions of session key generation, encoding, data encryption key generation and decoding by individual modules.

Referring to FIG. 1 once again, the secret key generation unit 21 generates the secret key to be provided to the security server 10 as a pseudorandom number. The secret key, which is an encryption key between the security server 10 and the user terminal 20, is used to encode and decode the security data and the data encryption key.

The storage unit 22 stores the secret key, the session key and the security data provided from the security server 10. The security data, which are stored in the storage unit 22, include the security data transmitted to the service providing server 30 via the security server 10 when the user terminal 20 is the security data transmitter, as well as the security data inputted from the service providing server 30 via the security server 10 when the user terminal is the security data receiver. Also, when the user terminal 20 is the security data transmitter, the storage unit 22 may temporarily store the security data inputted from the user input unit 23.

When the user terminal is the security data receiver, the decoding unit 24 decodes the data encryption key transmitted from the service providing server 30 with the secret key to thereby extract the data key from the data encryption key. As mentioned above, this data key is used as the data request key.

The data communication unit 25 transmits/receives at least one of the secret key, the session key, the security data, the data encryption key and the security data request key to/from the security server 10 based on SSL. Also, the data communication unit 25 transmits/receives the session key and the data encryption key to/from the service providing server 30 based on transmission control protocol/Internet protocol (TCP/IP).

The user terminal 20 may include a display unit (not illustrated in FIG. 1) for displaying contents provided from the service providing server 30. Also, the user terminal 20 may include a control unit for controlling the secret key generation unit 21, the storage unit 22, the user input unit 23, the decoding unit 24 and the data communication unit 25. As mentioned above, when the security data decoded by the decoding unit 15 of the security server 10 is represented by XML, the control unit may play the role of an XML parser. Further, the user terminal 20 may include an additional XML parser according to another embodiment of the present invention. The secret key generation unit 21 and the decoding unit 24 may be embodied as individual devices or as one device. For example, the secret key generation unit 21 and the decoding unit 24 may be embodied as a signal processor performing the functions of the secret key generation and the decoding by individual modules.

Referring to FIG. 1, the data communication unit 31 of the service providing server 30 communicates with the security server 10 based on SSL under the control of the control unit 32 to thereby transmit/receive the session key, the data encryption key and the security data. It then communicates with the user terminal 20 based on TCP/IP to thereby transmit/receive the session key and the data encryption key.

The storage unit 33 stores the security data to be provided to the user terminal 20 via the security server 10, the session key transmitted from the user terminal 20, and a variety of content information provided to the user terminal 20 under the control of the control unit 32. The storage unit 33 stores the data encryption key to be transmitted from the security server 10 when the service providing server 30 is the security data transmitter. The storage unit 33 stores the data encryption key transmitted from the user terminal 20 and the security data transmitted from the security server 10 when the service providing server 30 is the security data receiver.

In accordance with another embodiment of the present invention, a method of intermediating transmission/reception of the security data between the user terminal and the service providing server, which are mentioned above, may be a storage media configured to record computer readable instructions.

Although embodiments have been described with reference to a number of illustrative embodiments thereof, it should be understood that numerous other modifications and embodiments can be devised by those skilled in the art that will fall within the scope of the principles of this disclosure. Also, these variations and modifications are possible within the scope of the appended claims.

### [Industrial Applicability]

As the security server for intermediating transmission/reception of the security data between the user terminal and the service providing server is equipped, the burden created due to the installation of certificates on the service providing server may be reduced.

## Claims

1. A security server (10) for intermediating transmission/reception of security data between a service providing server (30) and a user terminal (20), wherein the security server is configured to: generate a session key corresponding to a secret key provided from a user terminal; receive security data together with the session key from a security data transmitter, which is one of the service providing server (30) and the user terminal (20); encode the security data with the secret key corresponding to the session key; store the encoded security data; generate a data key of the security data; generate a data encryption key by encoding the data with the secret key; provide the data encryption key to the security data transmitter; decode the encoded security data with the secret key corresponding to the session key when the session key is received together with a security data request key from a security data receiver, which is the other one of the user terminal (20) and the service providing server (30); and provide the decoded security data to the security data receiver.

2. The security server (10) of Claim 1, comprising:
a session key generation unit (11) configured to generate the session key corresponding to the secret key provided from the user terminal;
an encoding unit (12) configured to encode the security data received together with the session key from the security data transmitter, which is one of the user terminal (20) or the service providing server (30), with the secret key corresponding to the session key;
a data encryption key generation unit (13) configured to generate a data key of the encoded security data and encode the data key with the secret key to generate the data encryption key;
a storage unit (14) configured to store the secret key, the session key, the data key and the encoded security data, which are associated with each other;
a decoding unit (15) configured to decode the encoded security data with the secret key corresponding to the session key when the session key is received together with the security data request key from a security data receiver, which is one of the service providing server (30) and the user terminal (20); and
a data communication unit (16) configured to transmit/receive the session key and the secret key to/from the user terminal, transmit/receive the security data and the data encryption key to/from the security data transmitter, and transmit/receive the security data, the session key and the security data request key to/from the security data receiver.

3. The security server (10) of Claim 2, wherein the security data request key is the data encryption key transmitted from the service providing server (30) or the data key extracted from the data encryption key decoded with the secret key, and wherein the data encryption key is received by the user terminal (20) from the service providing server (30).

4. The security server (10) of Claim 2, wherein the encoding unit (12) is configured to encode the security data in a Rijndael encryption way.

5. The security server (10) of Claim 2, wherein the data communication unit (16) is configured to communicate with the user terminal (20) and the service providing server (30) based on a secure sockets layer.

6. A system including a user terminal (20), a service providing server (30) and a security server (10) for intermediating transmission/reception of the security data between the user terminal (20) and the service providing server (30), comprising:
the security server (10) configured to generate a session key corresponding to a secret key provided from the user terminal, receive security data together with the session key from a security data transmitter, which is one of the user terminal (20) and the service providing server (30), encode the security data with the secret key corresponding to the session key, store the encoded security data, generate a data key of the security data, generate a data encryption key by encoding the data key with the secret key, provide the data encryption key to a security data transmitter, decode the encoded security data with the secret key corresponding to the session key when the session key is received together with the security data request key from the security data receiver, which is the other one of the user terminal (20) and the service providing server (30), and provide the decoded security data to the security data receiver;
the user terminal (20) configured to generate the secret key, transmit the session key and the security data and provide the data encryption key to the service providing server (30) in case of the security data transmitter, and receive the data encryption key from the service providing server (30), transmit the session key and the security data request key to the security server (10) and receive the decoded security data from the security server (10) in case of the security data receiver; and
the service providing server (30) configured to transmit the session key and the security data to the security server (10) and provide the data encryption key transmitted from the security server (10) in case of the security data transmitter, receive the session key and the data encryption key from the user terminal (20), transmit the session key and the security data request key to the security server (10) and receive the decoded security data from the security server (10) in case of the security data receiver.

7. The system of Claim 6, wherein the security data request key is the data encryption key transmitted from the service providing server (30) or the data key extracted from the data encryption key decoded with the secret key, and wherein the data encryption key is received by the user terminal (20) from the service providing server (30).

8. The system of Claim 7, wherein the security server (10) includes:
a session key generation unit (11) configured to generate the session key corresponding to the secret key provided from the user terminal (20);
an encoding unit (12) configured to encode the security data received together with the session key from the security data transmitter, which is one of the user terminal (20) or the service providing server (30), with the secret key corresponding to the session key;
a data encryption key generation unit (13) configured to generate a data key of the encoded security data and encode the data key with the secret key to generate the data encryption key;
a storage unit (14) configured to store the secret key, the session key, the data key and the encoded security data, which are associated with each other;
a decoding unit (15) configured to decode the encoded security data with the secret key corresponding to the session key when the session key is received together with the security data request key from a security data receiver, which is one of the service providing server (30) and the user terminal (20); and
a first data communication unit (16) configured to transmit/receive the session key and the secret key to/from the user terminal, transmit/receive the security data and the data encryption key to/from the security data transmitter, and transmit/receive the security data, the session key and the security data request key to/from the security data receiver.

9. The system of Claim 8, wherein the user terminal includes:
a secret key generation unit (21) configured to generate the secret key;
a storage unit (22) configured to store the secret key, the session key and the security data;
a decoding unit (24) configured to decode the data encryption key provided from the service providing server (30) with the secret key to extract the data key; and
a second data communication unit (25) configured to transmit/receive at least one of the secret key, the session key, the security data, the data encryption key and the security data request key to/from the security server (10), and transmit/receive at least one of the session key and the security data request key to/from the service providing server (30).

10. The system of Claim 8, wherein the service providing server (30) includes:
a third data communication unit (31) configured to transmit/receive the session key, the data encryption key and the security data to/from the security server, and transmit/receive the session key and the data encryption key to/from the user terminal (20);
a storage unit (33) configured to store the security data to be provided to the user terminal (20) via the security server (10), the data encryption key provided from the security server (10), the data encryption key transmitted from the user terminal (20) and the security data transmitted from the security server (10); and
a control unit (32) configured to control the third data communication unit (31) and the storage unit (33).

11. The system of Claim 8, wherein the user terminal (20) and the service providing server (30) are configured to communicate with the security server (10) based on SSL, and wherein the user terminal (20) and the service providing server (30) are configured to communicate with each other based on transmission/control protocol/Internet protocol.

12. A method of intermediating transmission/reception of security data between a service providing server (30) and a user terminal (20) by using a security server (10), comprising:
Generating, at the security server (10), a session key corresponding to a secret key provided from the user terminal (20);
providing, at the security server (10), the session key to the user terminal;
receiving, at the security server (10), security data together with the session key from a security data transmitter, which is one of the user terminal and the service providing server;
encoding, at the security server (10), the security data with the secret key corresponding to the session key;
generating, at the security server (10), a data key of the encoded security data;
encoding, at the security server (10), the data key with the secret key to generate a data encryption key;
providing, at the security server (10), the data encryption key to the security data transmitter;
associating and storing, at the security server (10), the secret key, the session key, the data key and the encoded security data;
decoding, at the security server (10), the encoded security data with the secret key corresponding to the session key when the session key and a security data request key are received from a security data receiver, which is one of the service providing server and the user terminal; and
providing, at the security server (10), the decoded security data to the security data receiver.

13. The method of Claim 12, wherein the security data request key is the data encryption key transmitted from the service providing server (30) or the data key extracted from the data encryption key decoded with the secret key, and wherein the data encryption key is received by the user terminal (20) from the service providing server (30).

14. The method of Claim 12, wherein the security data are encoded in a Rjjndael encryption way.

15. The method of Claim 12, wherein the user terminal (20) and the service providing server (30) are configured to communicate with the security server based on SSL, and wherein the user terminal (20) and the service providing server (30) are configured to communicate with each other based on transmission/control protocol/Internet protocol.

16. A storage medium storing computer readable instructions for performing a method of intermediating transmission/reception of security data between a service providing server (30) and a user terminal (20) by using a security server (10), wherein the method comprises:
generating, at the security server (10), a session key corresponding to a secret key provided form the user terminal (20); providing the session key to the user terminal (20);
receiving, at the security server (10), security data together with the session key from a security data transmitter, which is one of the user terminal (20) and the service providing server (30);
encoding, at the security server (10), the security data with the security key corresponding to the session key;
generating, at the security server (10), a data key of the encoded security data;
encoding, at the security server (10), the data key with the secret key to generate a data encryption key;
providing, at the security server (10), the data encryption key to the security data transmitter;
associating and storing, at the security server (10), the secret key, the session key, the data key and the encoded security data;
decoding, at the security server (10), the encoded security data with the secret key corresponding to the session key when the session key and a security data request key are received from a security data receiver, which is one of the service providing server (30) and the user terminal (20); and
providing, at the security server (10), the decoded security data to the security data receiver.

17. The storage medium of Claim 16 wherein the security data request key is the data encryption key transmitted from the service providing server or the data key extracted from the data encryption key decoded with the secret key, and wherein the data encryption key is received by the user terminal from the service providing server.

18. The storage medium of Claim 16 wherein the security data are encoded in a Rjjndael encryption way.

19. The storage medium of Claim 16 wherein the user terminal and the service providing server communicate with the security server based on SSL, and wherein the user terminal and the service providing server communicate with each other based on transmission/control protocol/Internet protocol.

## Patentansprüche

1. Sicherheitsserver (10) zum vermittelnden Senden/Empfangen von Sicherheitsdaten zwischen einem Dienstleistungsserver (30) und einer Benutzerstation (20), wobei der Sicherheitsserver so konfiguriert ist, dass er einen Sitzungsschlüssel erzeugt, der mit einem Geheimschlüssel korrespondiert, welcher von einer Benutzerstation bereitgestellt wird, dass er Sicherheitsdaten zusammen mit dem Sitzungsschlüssel von einem Sicherheitsdatenübermittler empfängt, wobei der Sicherheitsdatenübermittler entweder der Dienstleistungsserver (30) oder die Benutzerstation (20) ist, dass er die Sicherheitsdaten mit dem Geheimschlüssel verschlüsselt, der mit dem Sitzungsschlüssel korrespondiert, dass er die verschlüsselten Sicherheitsdaten speichert, dass er einen Datenschlüssel der Sicherheitsdaten erzeugt, dass er einen Datenverschlüsselungsschlüssel durch die Verschlüsselung der Daten mit dem Geheimschlüssel erzeugt, dass er den Datenverschlüsselungsschlüssel dem Sicherheitsdatenübermittler bereitstellt, dass er die verschlüsselten Sicherheitsdaten unter Verwendung des mit dem Sitzungsschlüssel korrespondierenden Geheimschlüssels entschlüsselt, wenn der Sitzungsschlüssel zusammen mit einem Sicherheitsdatenanfrageschlüssel vom Sicherheitsdatenempfänger empfangen wird, welcher der jeweils andere von der Benutzerstation (20) oder dem Dienstleistungsserver (30) ist und dass er die entschlüsselten Sicherheitsdaten dem Sicherheitsdatenempfänger bereitstellt.

2. Sicherheitsserver (10) nach Anspruch 1, der umfasst:
eine Sitzungsschlüsselerzeugereinheit (11), die so konfiguriert ist, dass sie einen Sitzungsschlüssel erzeugt, der mit einem Geheimschlüssel korrespondiert,
der von der Benutzerstation bereitgestellt wird,
eine Verschlüsselungseinheit (12), die so konfiguriert ist, dass sie die Sicherheitsdaten, die sie zusammen mit dem Sitzungsschlüssel vom Sicherheitsdatenübermittler, der entweder die Benutzerstation (20) oder der Dienstleistungsserver (30) ist, empfängt, mit dem mit dem Sitzungsschlüssel korrespondierenden Geheimschlüssel verschlüsselt,
eine Einheit zur Erzeugung eines Datenverschlüsselungsschlüssels (13), die so konfiguriert ist, dass sie einen Datenschlüssel aus den verschlüsselten Sicherheitsdaten erzeugt und den Datenschlüssel mit dem Geheimschlüssel verschlüsselt, um den Datenverschlüsselungsschlüssel zu erzeugen,
eine Speichereinheit (14), die so konfiguriert ist, dass sie den Geheimschlüssel, den Sitzungsschlüssel, den Datenschlüssel und die verschlüsselten Sicherheitsdaten speichert, welche miteinander verbunden sind,
eine Dekodiereinheit (15), die so konfiguriert ist, dass sie die verschlüsselten Sicherheitsdaten mit dem Geheimschlüssel entschlüsselt, der mit dem Sitzungsschlüssel korrespondiert, wenn der Sitzungsschlüssel zusammen mit dem Sicherheitsdatenanfrageschlüssel vom Sicherheitsdatenempfänger empfangen wird, der entweder der Dienstleistungsserver (30) oder die Benutzerstation (20) ist, und
eine Datenkommunikationseinheit (16), die so konfiguriert ist, dass sie den Sitzungsschlüssel und den Geheimschlüssel an die Benutzerstation sendet bzw. von der Benutzerstation empfängt, dass sie die Sicherheitsdaten und
den Datenverschlüsselungsschlüssel an den Sicherheitsdatenübermittler sendet bzw. vom Sicherheitsdatenübermittler empfängt, und dass sie die Sicherheitsdaten, den Sitzungsschlüssel und den Sicherheitsdatenanfrageschlüssel an den Sicherheitsdatenempfänger sendet bzw. vom Sicherheitsdatenempfänger empfängt.

3. Sicherheitsserver (10) nach Anspruch 2, wobei der Sicherheitsdatenanfrageschlüssel der Datenverschlüsselungsschlüssel ist, der vom Dienstleistungsserver (30) gesendet wird, oder der Datenschlüssel ist, der aus dem mit dem Geheimschlüssel entschlüsselten Datenverschlüsselungsschlüssel extrahiert wird, wobei der Datenverschlüsselungsschlüssel von der Benutzerstation (20) von dem Dienstleistungsservers (30) empfangen wird.

4. Sicherheitsserver (10) nach Anspruch 2, wobei die Verschlüsselungseinheit (12) so konfiguriert ist, dass sie die Sicherheitsdaten in einer Rjjndael-Verschlüsselungsmethode verschlüsselt.

5. Sicherheitsserver (10) nach Anspruch 2, wobei die Datenkommunikationseinheit (16) so konfiguriert ist, dass sie mit der Benutzerstation (20) und dem Dienstleistungsserver (30) basierend auf Secure Sockets Layer (SSL) kommuniziert.

6. System mit einer Benutzerstation (20), einem Dienstleistungsserver (30) und einem Sicherheitsserver (10) zum vermittelndem Senden/ Empfangen von Sicherheitsdaten zwischen einer Benutzerstation (20) und einem Dienstleistungsserver (30), das umfasst:
den Sicherheitsserver (10), der so konfiguriert ist, dass er einen Sitzungsschlüssel erzeugt, der mit einem durch die Benutzerstation bereitgestellten Geheimschlüssel korrespondiert, dass er Sicherheitsdaten zusammen mit dem Sitzungsschlüssel von einem Sicherheitsdatenübermittler, der entweder die Benutzerstation (20) oder der Dienstleistungsserver (30) ist, empfängt,
dass er die Sicherheitsdaten mit dem mit dem Sitzungsschlüssel korrespondierenden Geheimschlüssel verschlüsselt, dass er die verschlüsselten Sicherheitsdaten speichert, dass er einen Datenschlüssel für die Sicherheitsdaten erzeugt, dass er einen Datenverschlüsselungsschlüssel erzeugt, indem er den Datenschlüssel mit dem Geheimschlüssel verschlüsselt, dass er den Datenverschlüsselungsschlüssel dem Sicherheitsdatenübermittler bereitstellt, dass er die verschlüsselten Sicherheitsdaten unter Verwendung des mit dem Sitzungsschlüssel korrespondierenden Geheimschlüssels entschlüsselt, wenn der Sitzungsschlüssel zusammen mit dem Sicherheitsdatenanfrageschlüssel vom Sicherheitsdatenempfänger empfangen wird, welcher entsprechend entweder die Benutzerstation (20) oder der Dienstleistungsserver (30) ist, und
dass er die entschlüsselten Sicherheitsdaten dem Sicherheitsdatenempfänger bereitstellt,
die Benutzerstation (20), die so konfiguriert ist, dass sie den Geheimschlüssel erzeugt, den Sitzungsschlüssel und die Sicherheitsdaten sendet und den Datenverschlüsselungsschlüssel dem Dienstleistungsserver (30) im Falle des Sicherheitsdatenübermittlers bereitstellt, und dass sie den Datenverschlüsselungsschlüssel vom Dienstleistungsserver (30) empfängt, den Sitzungsschlüssel und den Sicherheitsdatenanfrageschlüssel an den Sicherheitsserver (10) sendet und die entschlüsselten Sicherheitsdaten vom Sicherheitsserver (10) im Falle des Sicherheitsdatenempfänger empfängt, und
den Dienstleistungsserver (30), der so konfiguriert ist, dass er den Sitzungsschlüssel und die Sicherheitsdaten an den Sicherheitsserver (10) sendet und
den vom Sicherheitsserver (10) gesendeten Datenverschlüsselungsschlüssel im Falle des Sicherheitsdatenübermittler bereitstellt, und dass er den Sitzungsschlüssel und den Datenverschlüsselungsschlüssel von der Benutzerstation (20) empfängt, den Sitzungsschlüssel und den Sicherheitsdatenanfrageschlüssel an den Sicherheitsserver (10) sendet und die entschlüsselten Sicherheitsdaten vom Sicherheitsserver (10) im Falle des Sicherheitsdatenempfängers empfängt

7. System nach Anspruch 6, wobei der Sicherheitsdatenanfrageschlüssel der Datenverschlüsselungsschlüssel ist, der vom Dienstleistungsserver (30) gesendet wird, oder der Datenschlüssel ist, der aus dem durch den Geheimschlüssel entschlüsselten Datenverschlüsselungsschlüssel extrahiert ist, und wobei der Datenverschlüsselungsschlüssel von der Benutzerstation (20) von dem Dienstleistungsserver (30) empfangen wird.

8. System nach Anspruch 7, wobei der Sicherheitsserver (10) umfasst:
eine Sitzungsschlüsselerzeugereinheit (11), die so konfiguriert ist, dass sie einen Sitzungsschlüssel erzeugt, der mit dem Geheimschlüssel korrespondiert,
der von der Benutzerstation (20) bereitgestellt wird,
eine Verschlüsselungseinheit (12), die so konfiguriert ist, dass sie die Sicherheitsdaten, die sie zusammen mit dem Sitzungsschlüssel vom Sicherheitsdatenübermittler empfängt, mit dem mit dem Sitzungsschlüssel korrespondierenden Geheimschlüssel verschlüsselt, wobei der Sicherheitsdatenübermittler entweder die Benutzerstation (20) oder der Dienstleistungsserver (30) ist,
eine Einheit zur Erzeugung eines Datenverschlüsselungsschlüssels (13), die so konfiguriert ist, dass sie einen Datenschlüssel der verschlüsselten Sicherheitsdaten erzeugt und den Datenschlüssel mit dem Geheimschlüssel verschlüsselt, um den Datenverschlüsselungsschlüssel zu erzeugen,
eine Speichereinheit (14), die so konfiguriert ist, dass sie den Geheimschlüssel, den Sitzungsschlüssel, den Datenschlüssel und die verschlüsselten Sicherheitsdaten speichert, die zusammengehörig sind,
eine Dekodiereinheit (15), die so konfiguriert ist, dass sie die verschlüsselten Sicherheitsdaten mit dem mit dem Sitzungsschlüssel korrespondierenden Geheimschlüssel entschlüsselt, wenn der Sitzungsschlüssel zusammen mit dem Sicherheitsdatenanfrageschlüssel von einem Sicherheitsdatenempfänger empfangen wird, wobei der Sicherheitsdatenempfänger entweder der Dienstleistungsserver (30) oder die Benutzerstation (20) ist, und
eine erste Datenkommunikationseinheit (16), die so konfiguriert ist, dass sie den Sitzungsschlüssel und den Geheimschlüssel an die Benutzerstation sendet bzw. von der Benutzerstation empfängt, dass sie die Sicherheitsdaten und
den Datenverschlüsselungsschlüssel an den Sicherheitsdatenübermittler sendet bzw. vom Sicherheitsdatenübermittler empfängt, und dass sie die Sicherheitsdaten, den Sitzungsschlüssel und den Sicherheitsdatenanfrageschlüssel an den Sicherheitsdatenempfänger sendet bzw. vom Sicherheitsdatenempfänger empfängt.

9. System nach Anspruch 8, wobei die Benutzerstation umfasst:
eine Erzeugereinheit für den Geheimschlüssel (21), die so konfiguriert ist,
dass sie den Geheimschlüssel erzeugt,
eine Speichereinheit (22) die so konfiguriert ist, dass sie den Geheimschlüssel,
den Sitzungsschlüssel und die Sicherheitsdaten speichert,
eine Dekodiereinheit (24), die so konfiguriert ist, dass sie den Datenverschlüsselungsschlüssel, der vom Dienstleistungsserver (30) bereitgestellt wird, mit dem Geheimschlüssel entschlüsselt, um den Datenschlüssel zu extrahieren,
und
eine zweite Datenkommunikationseinheit (25), die so konfiguriert ist, dass sie wenigstens ein Element aus der Gruppe aus dem Geheimschlüssel, dem Sitzungsschlüssel, den Sicherheitsdaten, dem Datenverschlüsselungsschlüssel und dem Sicherheitsdatenanfrageschlüssel an den Sicherheitsserver (10) sendet bzw. vom Sicherheitsserver (10) empfängt und wenigstens den Sitzungsschlüssel oder den Sicherheitsdatenanfrageschlüssel an den Dienstleistungsserver (30) sendet bzw vom Dienstleistungsserver (30) empfängt.

10. System nach Anspruch 8, wobei der Dienstleistungsserver (30) umfasst:
eine dritte Datenkommunikationseinheit (31), die so konfiguriert ist, dass sie den Sitzungsschlüssel, den Datenverschlüsselungsschlüssel und die Sicherheitsdaten an den Sicherheitsserver (10) sendet bzw. vom Sicherheitsserver (10) empfängt und den Sitzungsschlüssel und den Datenverschlüsselungsschlüssel an die Benutzerstation (20) sendet bzw. von der Benutzerstation (20) empfängt,
eine Speichereinheit (33) die so konfiguriert ist, dass sie die Sicherheitsdaten speichert, um sie der Benutzerstation (20) über den Sicherheitsserver (10) bereitzustellen, dass sie den Datenverschlüsselungsschlüssel speichert, der vom Sicherheitsserver (10) bereitgestellt wird, dass sie den Datenverschlüsselungsschlüssel speichert, der von der Benutzerstation (10) gesendet wird und
dass sie die Sicherheitsdaten speichert, die vom Sicherheitsserver (10) gesendet werden, und
eine Kontrolleinheit (32), die so konfiguriert ist, dass sie die dritte Datenkommunikationseinheit (31) und die Speichereinheit (33) kontrolliert.

11. System nach Anspruch 8, wobei die Benutzerstation (20) und der Dienstleistungsserver (30) so konfiguriert sind, dass sie mit dem Sicherheitsserver (10) mittels SSL kommunizieren und wobei die Benutzerstation (20) und der Dienstleistungsserver (30) so konfiguriert sind, dass sie miteinander über ein Übertragungs-/ Kontrollprotokoll/Internetprotokoll kommunizieren.

12. Verfahren zum vermittelnden Senden/ Empfangen von Sicherheitsdaten zwischen einem Dienstleistungsserver (30) und einer Benutzerstation (20) durch Verwendung eines Sicherheitsservers (10) umfassend:
Erzeugung eines Sitzungsschlüssels im Sicherheitsserver (10), wobei der Sitzungsschlüssel mit einem Geheimschlüssel korrespondiert, der durch die Benutzerstation (20) bereitgestellt wird,
Bereitstellung des Sitzungsschlüssels an die Benutzerstation (20) durch den Sicherheitsserver (10),
Empfang der Sicherheitsdaten zusammen mit dem Sitzungsschlüssel von einem Sirherheitsdatenübermittler durch den Sicherheitsserver (10), wobei der Sicherheitsdatenübermittler entweder die Benutzerstation (20) oder der Dienstleistungsserver (30) ist,
Verschlüsselung der Sicherheitsdaten im Sicherheitsserver (10) unter Verwendung des Geheimschlüssels, der mit dem Sitzungsschlüssel korrespondiert,
Erzeugung eines Datenschlüssels der verschlüsselten Sicherheitsdaten im Sicherheitsserver (10),
Verschlüsselung des Datenschlüssels im Sicherheitsserver (10) unter Verwendung des Geheimschlüssels, wobei ein Datenverschlüsselungsschlüssel erzeugt wird,
Bereitstellung des Datenverschlüsselungsschlüssels an den Sicherheitsdatenübermittler durch den Sicherheitsserver (10),
Zuordnung und Speicherung des Geheimschlüssels, des Sitzungsschlüssels,
des Datenschlüssels und der verschlüsselten Sicherheitsdaten im Sicherheitsserver (10),
Entschlüsseln der verschlüsselten Sicherheitsdaten im Sicherheitsserver (10) unter Verwendung des Geheimschlüssels, der mit dem Sitzungsschlüssel korrespondiert, wenn der Sitzungsschlüssel und ein Sicherheitsdatenanfrageschlüssel von einem Sicherheitsdatenempfänger empfangen werden, wobei der Sicherheitsdatenempfänger der Dienstleistungsserver oder die Benutzerstation ist, und
Bereitstellung der entschlüsselten Sicherheitsdaten an den Sicherheitsdatenempfänger durch den Sicherheitsserver (10).

13. Verfahren nach Anspruch 12, wobei der Sicherheitsdatenanfrageschlüssel der Datenverschlüsselungsschlüssel ist, der vom Dienstleistungsserver (30) gesendet wird, oder der Datenschlüssel ist, der aus dem Datenentschlüsselungsschlüssel mittels des Geheimschlüssels extrahiert wurde, und wobei der Datenverschlüsselungsschlüssel von der Benutzerstation (20) von dem Dienstleistungsserver (30) empfangen wird.

14. Verfahren nach Anspruch 12, wobei die Sicherheitsdaten nach einer Rjjndael-Verschlüsselungsmethode verschlüsselt sind.

15. Verfahren nach Anspruch 12, wobei die Benutzerstation (20) und der Dienstleistungsserver (30) so konfiguriert sind, dass sie mit dem Sicherheitsserver (10) mittels SSL kommunizieren und wobei die Benutzerstation (20) und der Dienstleistungsserver (30) so konfiguriert sind, dass sie miteinander über ein Ubertragungs-/ Kontrollprotokoll/Internetprotokoll kommunizieren.

16. Speichermedium, das computerlesbare Anweisungen zur Ausführung eines Verfahrens zum vermittelnden Senden/ Empfangen von Sicherheitsdaten zwischen einem Dienstleistungsserver (30) und einer Benutzerstation (20) über einen Sicherheitsserver (10) speichert, wobei das Verfahren beinhaltet:
Erzeugung eines Sitzungsschlüssels im Sicherheitsserver (10), wobei der Sitzungsschlüssel mit einem Geheimschlüssel korrespondiert, der durch die Benutzerstation (20) bereitgestellt wird und der Sitzungsschlüssel der Benutzerstation (20) bereitgestellt wird,
Empfang der Sicherheitsdaten zusammen mit dem Sitzungsschlüssel durch den Sicherheitsserver (10) von einem Sicherheitsdatenübermittler, welcher entweder die Benutzerstation (20) oder der Dienstleistungsserver (30) ist,
Verschlüsselung der Sicherheitsdaten im Sicherheitsserver (10) unter Verwendung des Sicherheitsschlüssels, der mit dem Sitzungsschlüssel korrespondiert,
Erzeugung eines Datenschlüssels der verschlüsselten Sicherheitsdaten im Sicherheitsserver (10),
Verschlüsselung des Datenschlüssels im Sicherheitsserver (10) unter Verwendung des Geheimschlüssels, wobei ein Datenverschlüsselungsschlüssel erzeugt wird,
Bereitstellung des Datenverschlüsselungsschlüssels an den Sicherheitsdatenübermittler durch den Sicherheitsserver (10),
Zuordnung und Speicherung des Geheimschlüssels, des Sitzungsschlüssels,
des Datenschlüssels und der verschlüsselten Sicherheitsdaten im Sicherheitsserver (10),
Entschlüsseln der verschlüsselten Sicherheitsdaten im Sicherheitsserver (10) unter Verwendung des Geheimschlüssels, der mit dem Sitzungsschlüssel korrespondiert, wenn der Sitzungsschlüssel und ein Sicherheitsdatenanfrageschlüssel von einem Sicherheitsdatenempfänger empfangen werden, wobei der Sicherheitsdatenempfänger der Dienstleistungsserver (30) oder die Benutzerstation (20) ist, und
Bereitstellung der entschlüsselten Sicherheitsdaten an den Sicherheitsdatenempfänger durch den Sicherheitsserver (10).

17. Speichermedium nach Anspruch 16, wobei der Sicherheitsdatenanfrageschlüssel der Datenverschlüsselungsschlüssel ist, der vom Dienstleistungsserver gesendet wird, oder der Datenschlüssel ist, der aus dem vom Geheimschlüssel entschlüsselten Datenverschlüsselungsschlüssel extrahiert wird, und wobei der Datenverschlüsselungsschlüssel von der Benutzerstation von dem Dienstleistungsserver empfangen wird.

18. Speichermedium nach Anspruch 16, wobei die Sicherheitsdaten mit einer Rjjndael-Verschlüsselungsmethode verschlüsselt sind.

19. Speichermedium nach Anspruch 16, wobei die Benutzerstation und der Dienstleistungsserver mit dem Sicherheitsserver über SSL kommunizieren und wobei die Benutzerstation und der Dienstleistungsserver miteinander durch Übertragungs-/ Kontrollprotokoll/Internetprotokoll kommunizieren.

## Revendications

1. Serveur de sécurité (10) pour l'intermédiation de la transmission/de la réception de données de sécurité entre un serveur fournissant des services (30) et un terminal utilisateur (20), le serveur de sécurité étant configuré pour générer une clé de session correspondant à une clé secrète fournie par un terminal utilisateur, recevoir des données de sécurité ensemble avec la clé de session d'un émetteur de données de sécurité qui est l'un des éléments serveur fournissant des services (30) et terminal utilisateur (20), coder les données de sécurité avec la clé secrète correspondant à la clé de session, stocker les données de sécurité codées, générer une clé de données des données de sécurité, générer une clé de cryptage de données en codant les données avec la clé secrète, fournir la clé de cryptage de données à l'émetteur des données de sécurité, décoder les données de sécurité codées avec la clé secrète correspondant à la clé de session lorsque la clé de session est reçue ensemble avec une clé de demande de données d'un récepteur de données de sécurité qui est l'autre élément terminal utilisateur (20) et serveur fournissant des services (30) et fournir les données de sécurité décodées au récepteur de données de sécurité.

2. Serveur de sécurité (10) selon la revendication 1 comprenant :
une unité de génération de clé de session (11) configurée pour générer la clé de session correspondant à la clé secrète fournie par le terminal utilisateur ;
une unité de codage (12) configurée pour coder les données de sécurité reçues ensemble avec la clé de session de l'émetteur de données de sécurité, qui est l'un des éléments terminal utilisateur (20) ou serveur fournisseur de services (30), avec la clé secrète correspondant à la clé de session ;
une unité de génération de clé de cryptage de données (13) configurée pour générer une clé de données des données de sécurité codées et pour coder la clé de données avec la clé secrète pour générer la clé de cryptage de données ;
une unité de stockage (14) configurée pour stocker la clé secrète, la clé de session, la clé de données et les données de sécurité codées qui sont associées les unes avec les autres ;
une unité de décodage (15) configurée pour décoder les données de sécurité codées avec la clé secrète correspondant à la clé de session lorsque la clé de session est reçue ensemble avec la clé de demande de données de sécurité d'un récepteur de données de sécurité qui est l'un des éléments serveur fournissant des services (30) et terminal utilisateur (20) et
une unité de communication de données (16) configurée pour transmettre/recevoir la clé de session et la clé secrète au/du terminal utilisateur,
transmettre/recevoir les données de sécurité et la clé de cryptage de données à/de l'émetteur des données de sécurité et transmettre/recevoir les données de sécurité, la clé de session et la clé de demande de données de sécurité au/du récepteur de données de sécurité.

3. Serveur de sécurité (10) selon la revendication 2, la clé de demande de données de sécurité étant la clé de cryptage de données transmise par le serveur fournissant des services (30) ou la clé de données extraite de la clé de cryptage de données décodée avec la clé secrète et la clé de cryptage de données étant reçue par le terminal utilisateur (20) du serveur fournissant des services (30).

4. Serveur de sécurité (10) selon la revendication 2, l'unité de codage (12) étant configurée pour coder les données de sécurité selon la méthode de cryptage de Rijndael.

5. Serveur de sécurité (10) selon la revendication 2, l'unité de communication de données (16) étant configurée pour communiquer avec le terminal utilisateur (20) et le serveur fournissant des services (30) basé sur une couche de sockets sécurisée.

6. Système comprenant un terminal utilisateur (20), un serveur fournissant des services (30) et un serveur de sécurité (10) pour l'intermédiation de la transmission/de la réception de données de sécurité entre le terminal utilisateur et serveur fournissant des services (30) comprenant :
le serveur de sécurité (10) configuré pour générer une clé de session correspondant à une clé secrète fournie par le terminal utilisateur, recevoir des données de sécurité ensemble avec la clé de session d'un émetteur de données de sécurité qui est l'un des éléments terminal utilisateur (20) et serveur fournissant des services (30), coder les données de sécurité avec la clé secrète correspondant à la clé de session, stocker les données de sécurité codées,
générer une clé de données des données de sécurité, générer une clé de cryptage de données en codant les données avec la clé secrète, fournir la clé de cryptage de données à un émetteur de données de sécurité, décoder les données de sécurité codées avec la clé secrète correspondant à la clé de session lorsque la clé de session est reçue ensemble avec une clé de demande de données du récepteur de données de sécurité qui est l'autre élément terminal utilisateur (20) et serveur fournissant des services (30) et fournir les données de sécurité décodées au récepteur de données de sécurité ;
le terminal utilisateur (20) configuré pour générer la clé secrète, transmettre la clé de session et les données de sécurité et fournir la clé de cryptage de données au serveur fournissant des services (30) dans le cas de l'émetteur des données de sécurité et recevoir la clé de cryptage de données du serveur fournissant des services (30), transmettre la clé de session et la clé de demande de données de sécurité au serveur de sécurité (10) et recevoir les données de sécurité décodées du serveur de sécurité (10) dans le cas du récepteur de données de sécurité et
le serveur fournissant des services (30) configuré pour transmettre la clé de session et les données de sécurité au serveur de sécurité (10) et fournir la clé de cryptage de données transmise par le serveur de sécurité (10) dans le cas de l'émetteur des données de sécurité, recevoir la clé de session et la clé de cryptage des données du terminal utilisateur (20), transmettre la clé de session et la clé de demande de données de sécurité au serveur de sécurité (10) et
recevoir les données de sécurité décodées du serveur de sécurité (10) dans le cas du récepteur de données de sécurité.

7. Système selon la revendication 6, la clé de demande de données de sécurité étant la clé de cryptage de données transmise par le serveur fournissant des services (30) ou la clé de données extraite de la clé de cryptage de données décodée avec la clé secrète et la clé de cryptage de données étant reçue par le terminal utilisateur (20) du serveur fournissant des services (30).

8. Système selon la revendication 7, le serveur de sécurité (10) comprenant :
une unité de génération de clé de session (11) configurée pour générer la clé de session correspondant à la clé secrète fournie par le terminal utilisateur (20) ;
une unité de codage (12) configurée pour coder les données de sécurité reçues ensemble avec la clé de session de l'émetteur de données de sécurité, qui est l'un des éléments terminal utilisateur (20) ou serveur fournisseur de services (30), avec la clé secrète correspondant à la clé de session ;
une unité de génération de clé de cryptage de données (13) configurée pour générer une clé de données des données de sécurité codées et pour coder la clé de données avec la clé secrète pour générer la clé de cryptage de données ;
une unité de stockage (14) configurée pour stocker la clé secrète, la clé de session, la clé de données et les données de sécurité codées qui sont associées les unes avec les autres ;
une unité de décodage (15) configurée pour décoder les données de sécurité codées avec la clé secrète correspondant à la clé de session lorsque la clé de session est reçue ensemble avec la clé de demande de données de sécurité d'un récepteur de données de sécurité qui est l'un des éléments serveur fournissant des services (30) et terminal utilisateur (20) et
une première unité de communication de données (16) configurée pour transmettre/recevoir la clé de session et la clé secrète au/du terminal utilisateur,
transmettre/recevoir les données de sécurité et la clé de cryptage de données à/de l'émetteur des données de sécurité et transmettre/recevoir les données de sécurité, la clé de session et la clé de demande de données de sécurité au/du récepteur de données de sécurité.

9. Système selon la revendication 8, le terminal utilisateur comprenant :
une unité de génération de clé secrète (21) configurée pour générer la clé secrète ;
une unité de stockage (22) configurée pour stocker la clé secrète, la clé de session et les données de sécurité ;
une unité de décodage (24) configurée pour décoder la clé de cryptage de données fournie par le serveur fournissant des services (30) avec la clé secrète pour extraire la clé de données et
une seconde unité de communication de données (25) configurée pour transmettre/recevoir au moins l'un des éléments clé secrète, clé de session,
données de sécurité, clé de cryptage de données et clé de demande de données de sécurité au/du serveur de sécurité (10) et transmettre/recevoir au moins l'un des éléments clé de session et clé de demande de données de sécurité au/du serveur fournissant des services (30).

10. Système selon la revendication 8, le serveur fournissant des services (30) comprenant
une troisième unité de communication de données (31) configurée pour transmettre/recevoir la clé de session, la clé de cryptage de données et les données de sécurité au/du serveur de sécurité et transmettre/recevoir la clé de session et la clé de cryptage de données au/du terminal utilisateur (20) ;
une unité de stockage (33) configurée pour stocker les données de sécurité à fournir au terminal utilisateur (20) par l'intermédiaire du serveur de sécurité (10), la clé de cryptage de données fournie par le serveur de sécurité (10), la clé de cryptage de données transmise par le terminal utilisateur (20) et les données de sécurité transmises par le serveur de sécurité (10) et
une unité de contrôle (32) configurée pour contrôler la troisième unité de communication de données (31) et l'unité de stockage (33).

11. Système selon la revendication 8, le terminal utilisateur (20) et le serveur fournissant des services (30) étant configurés pour communiquer avec le serveur de sécurité (10) basé sur SSL et le terminal utilisateur (20) et le serveur fournissant des services (30) étant configurés pour communiquer l'un avec l'autre sur la base d'un protocole de transmission/de contrôle/internet.

12. Procédé d'intermédiation de la transmission/de la réception de données de sécurité entre un serveur fournissant des services (30) et un terminal utilisateur (20) en utilisant un serveur de sécurité (10) comprenant :
la génération, au niveau du serveur de sécurité (10), d'une clé de session correspondant à une clé secrète fournie par le terminal utilisateur (20) ;
la fourniture, au niveau du serveur de sécurité (10), de la clé de session au terminal utilisateur ;
la réception, au niveau du serveur de sécurité (10), de données de sécurité ensemble avec la clé de session d'un émetteur de données de sécurité qui est l'un des éléments terminal utilisateur et serveur fournissant des services ;
le codage, au niveau du serveur de sécurité (10), de données de sécurité avec la clé secrète correspondant à la clé de session ;
la génération, au niveau du serveur de sécurité (10), d'une clé de données des données de sécurité codées ;
le codage, au niveau du serveur de sécurité (10), de la clé de données de sécurité avec la clé secrète pour générer une clé de cryptage de données ;
la fourniture, au niveau du serveur de sécurité (10), de la clé de cryptage de données à l'émetteur de données de sécurité ;
l'association et le stockage, au niveau du serveur de sécurité (10), de la clé secrète, de la clé de session, de la clé de données et des données de sécurité codées ;
le décodage, au niveau du serveur de sécurité (10), des données de sécurité codées avec la clé secrète correspondant à la clé de session lorsque la clé de session et une clé de demande de données de sécurité sont reçues par un récepteur de données de sécurité qui est l'un des éléments serveur fournissant des services et terminal utilisateur et
la fourniture, au niveau du serveur de sécurité (10), des données de sécurité décodées au récepteur de données de sécurité.

13. Procédé selon la revendication 12, la clé de demande de données de sécurité étant la clé de cryptage de données transmises par le serveur fournissant des services (30) ou la clé de données extraite de la clé de cryptage de données décodées avec la clé secrète et la clé de cryptage de données étant reçue par le terminal utilisateur (20) du serveur fournissant des services (30).

14. Procédé selon la revendication 12, les données de sécurité étant codées selon la méthode de cryptage de Rijndael.

15. Procédé selon la revendication 12, le terminal utilisateur (20) et le serveur fournissant des services (30) étant configurés pour communiquer avec le serveur de sécurité basé sur SSL et le terminal utilisateur (20) et le serveur 6
fournissant des services (30) étant configurés pour communiquer l'un avec l'autre sur la base d'un protocole de transmission/de contrôle/internet.

16. Moyen de stockage stockant des instructions lisibles par ordinateur pour réaliser un procédé d'intermédiation de la transmission/de la réception de données de sécurité entre un serveur fournissant des services (30) et un terminal utilisateur (20) en utilisant un serveur de sécurité (10), le procédé comprenant :
la génération, au niveau du serveur de sécurité (10), d'une clé de session correspondant à une clé secrète fournie par le terminal utilisateur (20) ;
la réception, au niveau du serveur de sécurité (10), de données de sécurité ensemble avec la clé de session d'un émetteur de données de sécurité qui est l'un des éléments terminal utilisateur (20) et serveur fournissant des services (30) ;
le codage, au niveau du serveur de sécurité (10), de données de sécurité avec la clé secrète correspondant à la clé de session ;
la génération, au niveau du serveur de sécurité (10), d'une clé de données des données de sécurité codées ;
le codage, au niveau du serveur de sécurité (10), de la clé de données avec la clé secrète pour générer une clé de cryptage de données ;
la fourniture, au niveau du serveur de sécurité (10), de la clé de cryptage de données à l'émetteur de données de sécurité ;
l'association et le stockage, au niveau du serveur de sécurité (10), de la clé secrète, de la clé de session, de la clé de données et des données de sécurité codées ;
le décodage, au niveau du serveur de sécurité (10), des données de sécurité codées avec la clé secrète correspondant à la clé de session lorsque la clé de session et une clé de demande de données de sécurité sont reçues par un récepteur de données de sécurité qui est l'un des éléments serveur fournissant des services (30) et terminal utilisateur (20) et
la fourniture, au niveau du serveur de sécurité (10), des données de sécurité décodées au récepteur de données de sécurité.

17. Moyen de stockage selon la revendication 16, la clé de demande de données de sécurité étant la clé de cryptage de données transmise par le serveur fournissant des services ou la clé de données extraite de la clé de cryptage de données avec la clé secrète et la clé de cryptage de données étant reçue par le terminal utilisateur du serveur fournissant des services.

18. Moyen de stockage selon la revendication 16, les données de sécurité étant codées selon la méthode de cryptage de Rijndael.

19. Moyen de stockage selon la revendication 16, le terminal utilisateur et le serveur fournissant des services communiquant avec le serveur de sécurité basé sur SSL et le terminal utilisateur et le serveur fournissant des services communiquant l'un avec l'autre sur la base d'un protocole de transmission/de contrôle/internet.
